# EUROPÄISCHE PATENTSCHRIFT

(11) **EP 0 855 543 B1**
(45) Veröffentlichungstag und Bekanntmachung des Hinweises auf die Patenterteilung: **02.01.2002**
(21) Anmeldenummer: 98100941.8
(22) Anmeldetag: 21.01.1998
(51) Int. Cl.: F16K 31/06

(54) **Elektromagnetisch betätigbares Schaltventil**
Solenoid valve
Electrovanne

(30) Priorität: 28.01.1997 DE 19702945; 16.08.1997 DE 29714681 U
(43) Veröffentlichungstag der Anmeldung: 29.07.1998
(73) Patentinhaber: Festo AG & Co, 73734 Esslingen (DE)
(72) Erfinder: Stoll, Kurt, Dr., 73732 Esslingen (DE); Schnatterer, Jürgen, 72649 Wolfschlugen (DE); Kärcher, Bernd, 72654 Neckartenzlingen (DE); Maichl, Martin, 73084 Salach (DE)
(74) Vertreter: Abel, Martin, Dipl.-Ing.

(56) Entgegenhaltungen:
- DE-A- 2 246 477
- DE-A- 2 826 973
- DE-A- 3 909 551
- DE-A- 4 419 875
- DE-A- 19 510 646
- DE-B- 1 151 699
- DE-B- 1 272 664
- DE-U- 9 203 413
- FR-A- 2 550 870
- GB-A- 880 131

## Beschreibung

Die Erfindung betrifft ein elektromagnetisch betätigbares Schaltventil, mit einem Ventilgehäuse, das eine Ventilkammer enthält, in die mehrere Ventilkanäle einmünden und in der sich ein zur Steuerung der Verbindung zwischen den Ventilkanälen unter Vermittlung eines Elektromagneten zwischen zwei Schaltstellungen umschaltbares, von einer Rückstellfederanordnung beaufschlagtes Ventilglied befindet, wobei das Ventilglied einen bezüglich des Ventilgehäuses in Richtung der Umschaltbewegungen verschiebbar geführten hülsenartigen Führungsabschnitt aufweist, der von der Spulenanordnung des Elektromagneten koaxial umschlossen ist und in einer der Schaltstellungen von dem zwischen zwei Ventilkanälen überströmenden Druckmedium axial durchströmt wird.

Ein Schaltventil dieser Art geht beispielsweise aus der DE 195 10 646 A hervor. Es hat ein Ventilglied mit hutähnlicher Gestalt, das zwischen zwei Schaltstellungen umschaltbar ist und durch eine Rückstellfederanordnung in eine der Schaltstellungen vorgespannt wird. Ein hülsenartig gestalteter Führungsabschnitt des Ventilgliedes ist so ausgelegt, dass er in einer der Schaltstellungen von dem zwischen zwei Ventilkanälen überströmenden Druckmedium durchströmt wird.

Bei diesem bekannten Schaltventil ist sowohl die Länge des Umschaltweges als auch die Vorspannung des Ventilgliedes fest vorgegeben.

Es ist die Aufgabe der vorliegenden Erfindung, ein Schaltventil der eingangs genannten Art zu schaffen, das sich für unterschiedliche Einsatzbedingungen optimieren lässt.

Zur Lösung dieser Aufgabe ist vorgesehen, dass ein im Umschaltweg des Ventilgliedes angeordnetes Anschlagteil vorgesehen ist, das zur variablen Vorgabe der Umschaltweglänge des Ventilgliedes relativ zum Ventilgehäuse verstellbar ist, und dass sich die Rückstellfederanordnung zwischen dem Ventilglied und einem Einstellglied abstützt, wobei das Einstellglied zur Vorgabe unterschiedlicher Federvorspannungen an dem Anschlagteil in Richtung der Umschaltbewegungen verstellbar gelagert ist.

Auf diese Weise kann ein und dasselbe Schaltventil für unterschiedliche Einsatzbedingungen optimiert werden. Entsprechend dem geforderten Durchsatz können durch Verstellen des Anschlagteils unterschiedliche Umschaltweglängen und dementsprechend unterschiedliche Durchströmquerschnitte vorgegeben werden. Außerdem besteht die Möglichkeit, die Federvorspannung der Rückstellfeder zu variieren. Da die verstellbare Lagerung des Einstellgliedes an dem ebenfalls verstellbaren Anschlagteil erfolgt, können nach Bedarf voneinander unabhängige Einstellungen der Federvorspannung und der Umschaltweglänge vorgenommen werden.

Aus der GB 880 131 A geht bereits ein Magnetventil hervor, bei dem das Ventilglied an einem gegenüber dem Ventilgehäuse verstellbaren Gewindeteil gelagert ist, wobei sich zwischen dem Ventilglied und dem Gewindeteil eine Rückstellfederanordnung abstützt. Durch Verstellen des Gewindeteils mit Bezug zum Gehäuse können gleichzeitig die Federvorspannung und der Öffnungshub variiert werden. Eine voneinander unabhängige Einstellung dieser beiden Parameter ist jedoch nicht vorgesehen.

Vorteilhafte Weiterbildungen der Erfindung gehen aus den Unteransprüchen hervor.

Zweckmäßigerweise verfügt das Ventilglied über einen zu dem Führungsabschnitt koaxialen ringscheibenartigen Ankerabschnitt, der radial nach außen vor die Spulenanordnung ragt, so dass sich bei kompakten Abmessungen hohe magnetische Umschaltkräfte realisieren lassen.

Um einen automatischen Ausgleich von Fluchtungsfehlern zu erhalten, ist es zweckmäßig, den Führungsabschnitt bezüglich des Ventilgehäuses quer zur Richtung der Umschaltbewegungen begrenzt beweglich und insbesondere begrenzt kippbar anzuordnen. Dadurch ergibt sich eine selbsttätige ständige Ausrichtung, so dass das Ventilglied mit minimaler Reibung und ohne Verkantungsgefahr umschaltbar ist.

Insbesondere wenn das Schaltventil als 2/2-Wegeventil ausgeführt ist, kann die Führungshülse über einen hülsenförmigen Absperrabschnitt verfügen, der in einer eine Schließstellung vorgebenden Schaltstellung eine radial gerichtete Ventilöffnung mit einer quer zur Richtung der Umschaltbewegungen orientierten Schließfläche schottähnlich überdeckt. Auf diese Weise kann erreicht werden, dass die in Richtung der Ventilöffnung auf das Ventilglied einwirkenden Fluidkräfte ausschließlich rechtwinkelig zur Richtung der Umschaltbewegungen wirken und dadurch keinerlei Maßnahmen zum Druckkraftausgleich bedürfen.

Besonders vorteilhaft ist auch ein Schaltventil, das als 3/2-Wegeventil ausgeführt ist, bei dem die Ventilkanäle einen mit einer fluidischen Druckmittelquelle verbindbaren Speisekanal, einen mit einem Verbraucher verbindbaren Arbeitskanal sowie einen Entlastungskanal umfassen. Hier verfügt das Ventilglied vorzugsweise über zwei axial entgegengesetzt orientierte und konzentrisch zum Führungsabschnitt angeordnete ringförmige Verschlußpartien, die mit in der jeweiligen Umschaltrichtung gegenüberliegenden gehäusefesten Ventilsitzen zusammenarbeiten können. Entsprechend dem gewählten Anschlußschema wird hierbei der hülsenartige Führungsabschnitt in einer der Schaltstellungen des Ventilgliedes entweder vom Speisekanal hin zum Arbeitskanal oder vom Arbeitskanal hin zum Entlastungskanal durchströmt, während der dritte Ventilkanal gleichzeitig abgetrennt ist.

Eine weitere Maßnahme zur Realisierung kompakter Längenabmessungen besteht darin, die zur Einspeisung der elektrischen Betätigungsenergie für die Spulenanordnung benötigte elektrische Anschlußvorrichtung im radialen Umfangsbereich der Spulenanordnung etwa auf gleicher axialer Höhe mit der Spulenanordnung zu plazieren.

Nachfolgend wird die Erfindung anhand der beiliegenden Zeichnung näher erläutert. Es zeigen im einzelnen:
- Fig. 1: eine erste Bauform des erfindungsgemäßen Schaltventils im Längsschnitt gemäß Schnittlinie I-I aus Fig. 2 in einer Ausgestaltung als 2/2-Wegeventil,
- Fig. 2: einen Querschnitt durch das Schaltventil aus Fig. 1 gemäß Schnittlinie II-II und
- Fig. 3: eine weitere Bauform des Schaltventils im Längsschnitt ähnlich der Fig. 1 in einer Ausgestaltung als 3/2-Wegeventil.

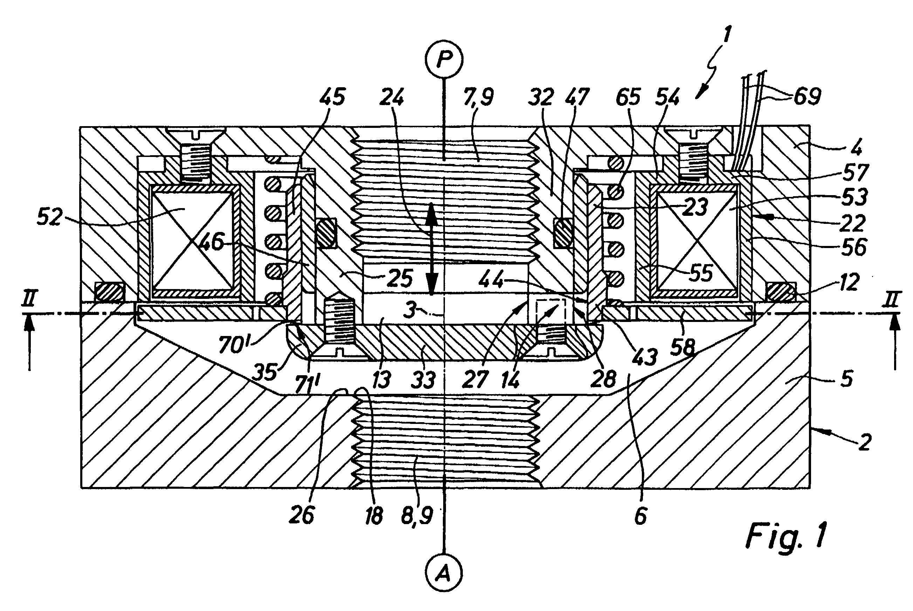

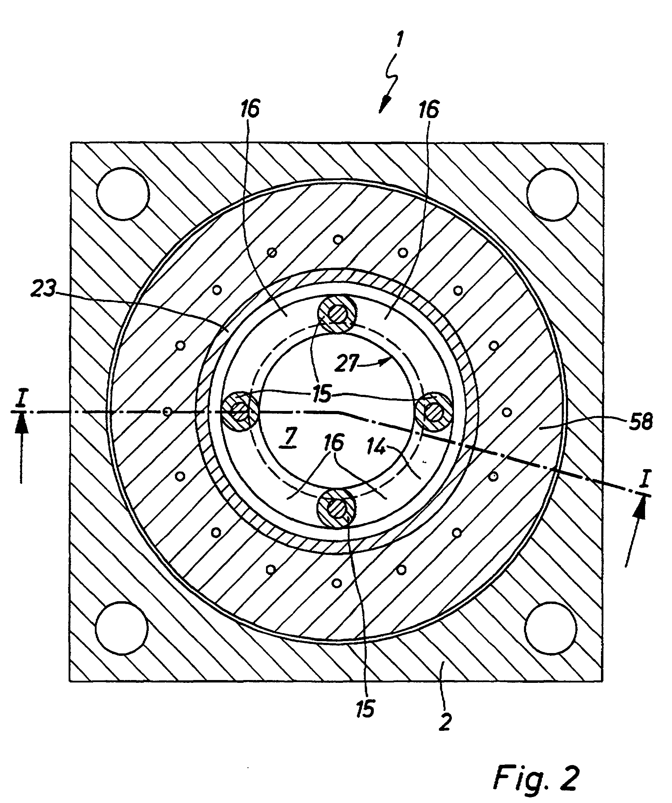

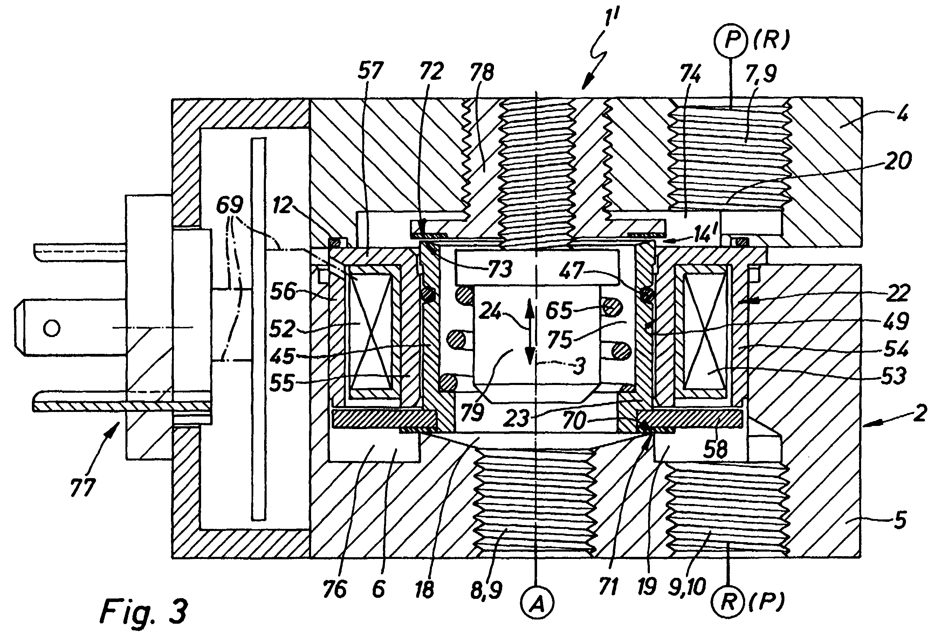

Sowohl das in Fig. 1 und 2 abgebildete Schaltventil 1 als auch das in Fig. 3 dargestellte Schaltventil 1' verfügen über ein Ventilgehäuse 2, das zwei in einer Längsrichtung 3 aneinandergesetzte plattenartige Gehäuseteile 4, 5 aufweist.

Im Innern des Ventilgehäuses 2 ist eine Ventilkammer 6 ausgebildet, die mit mehreren Ventilkanälen 9 kommuniziert. Die Ventilkammer 6 ist umfangsseitig von den beiden Gehäuseteilen 4, 5 begrenzt und bei voneinander abgenommenen Gehäuseteilen 4, 5 zugänglich. Die Abdichtung der Ventilkammer 6 zur Außenseite erfolgt in der Verbindungsebene zwischen den beiden Gehäuseteilen 4, 5 durch eine die Ventilkammer 6 umgebende ringförmige Dichtung 12. Durch nicht näher dargestellte Schrauben sind die Gehäuseteile 4, 5 lösbar fest zusammengespannt. Geeignete Befestigungslöcher können sich in den Eckenbereichen der vorzugsweise rechteckförmig konturierten Gehäuseteile befinden, wie dies in Fig. 2 angedeutet ist.

Bei den Ventilkanälen 9 des in Fig. 1 und 2 gezeigten Schaltventils 1 handelt es sich um einen mit einer fluidischen Druckmittelquelle P verbindbaren Speisekanal 7 und einen mit einem beliebigen Verbraucher A verbindbaren Arbeitskanal 8. Diese beiden Kanäle sind zweckmäßigerweise koaxial zueinander angeordnet, wobei ihre Längsachsen mit der Längsrichtung 3 zusammenfallen. Jedes der beiden Gehäuseteile 4, 5 weist einen der beiden Ventilkanäle 9 auf.

Das in Fig. 3 abgebildete Schaltventil 1' verfügt zusätzlich zu einem Speisekanal 7 und einem Arbeitskanal 8 über einen Entlastungskanal 10. Bei dem vorliegend mit Druckluft betriebenen Schaltventil stellt der Entlastungskanal 10 einen Entlüftungskanal dar, der zur Umgebung R ausmünden kann.

Bei dem Schaltventil 1' befindet sich der Speisekanal 7 am ersten Gehäuseteil 4, und die beiden anderen Kanäle sind im zweiten Gehäuseteil 5 ausgebildet. Ein geändertes Anschlußschema wäre möglich, bei dem der Speisekanal 7 und der Entlastungskanal 10 vertauscht sind.

Bei dem Schaltventil 1 der Fig. 1 und 2 mündet der Speisekanal 7 über eine Ventilöffnung 14 in die Ventilkammer 6 aus. Die Ventilöffnung 14 ist ausgehend vom Speisekanal 7 radial nach außen gerichtet und hat gemäß Fig. 2 eine ringähnliche Gestalt mit zur Längsachse 4 koaxialer Anordnung. Aus den nachstehend genannten Gründen ist sie durch mehrere Abstandshaltekörper 15 in mehrere in Umfangsrichtung aufeinanderfolgende Öffnungssegmente 16 unterteilt.

Die Ventilöffnung 14 befindet sich an einem Gehäusefortsatz 25 des den Speisekanal 7 enthaltenden ersten Gehäuseteils 4. Dieser Gehäusefortsatz 25 erstreckt sich koaxial zur Längsachse 3 in die Ventilkammer 6 hinein, wobei er mit Abstand vor der gegenüberliegenden Begrenzungsfläche 26 der Ventilkammer 6 endet, an der sich die Mündung 18 des Arbeitskanals 8 befindet.

Der Speisekanal 7 verläuft innerhalb des Gehäusefortsatzes 25. Ausgehend von der Außenfläche des Ventilgehäuses 2 erstreckt er sich zentral axial in den Gehäusefortsatz 25 hinein, wobei er vor Erreichen des freien Endes des Gehäusefortsatzes 25 endet. Die Ventilöffnung 14 ist im Bereich des inneren Endes 13 des Speisekanals 7 angeordnet und durchsetzt die ringförmige Wandung des Gehäusefortsatzes 25, wobei sie mit ihrem radialen Innenbereich 27 umfangsseitig in den Speisekanal 7 und an ihrem radialen Außenbereich 28 in die Ventilkammer 6 ausmündet. Die Ventilöffnung 14 ist hierbei schlitzartig ausgeführt und erstreckt sich über den gesamten Umfang des Speisekanals 7, wobei sie lediglich durch die Abstandshaltekörper 15 unterteilt ist.

Zugunsten einer einfachen Fertigung ist der Gehäusefortsatz 25 vorliegend in eine den Einlaßkanal 7 enthaltende Basispartie 32 sowie eine den Abschluß des inneren Endes des Speisekanals 7 bildende Abdeckscheibe 33 unterteilt. Die Abdeckscheibe 33 ist an die Abstandshaltekörper 15 angesetzt, die sich am freien Ende der Basispartie 32 befinden, wobei die Befestigung durch Schrauben 34 oder sonstige Befestigungselemente erfolgt, die in den Abstandshaltekörpern 15 verankert sind. Die Abdeckscheibe 33 könnte im übrigen auch einstückig an die Basispartie 32 angeformt sein.

Beim Ausführungsbeispiel der Fig. 3 ist die Mündung 18 des Arbeitskanals 8 koaxial zur Längsachse 3 angeordnet. Die ventilkammerseitige Mündung 19 des Entlastungskanals 10 liegt außermittig und ist bezüglich der Mündung 18 des Arbeitskanals 8 radial zur Seite hin versetzt. Eine vergleichbare exzentrische Anordnung liegt auch bei der Mündung 20 des Speisekanals 7 vor.

Zur Verbindung zwischen den Ventilkanälen 9 ist in der Ventilkammer 6 beider Ausführungsbeispiele ein Ventilglied 23 angeordnet, das unter Vermittlung eines Elektromagneten 22 zwischen zwei Schaltstellungen umschaltbar ist. Bei dem Schaltventil 1 der Fig. 1 und 2 sind die möglichen Schaltstellungen von der abgebildeten Schließstellung und einer Offenstellung gebildet. In der Schließstellung ist die Verbindung zwischen dem Speisekanal 7 und dem Arbeitskanal 8 unterbrochen, in der Offenstellung freigegeben.

Beim Schaltventil 1' gemäß Fig. 3 liegt in der abgebildeten ersten Schaltstellung eine Fluidverbindung zwischen dem Speisekanal 7 und dem Arbeitskanal 8 vor, wobei gleichzeitig der Entlastungskanal 10 abgetrennt ist. In der zweiten Schaltstellung ist der Speisekanal 7 abgetrennt, und es liegt eine Fluidverbindung zwischen dem Arbeitskanal 8 und dem Entlastungskanal 10 vor.

In beiden Fällen verfügt das Ventilglied 23 über einen hülsenartigen Führungsabschnitt 45, über den es bezüglich des Ventilgehäuses 2 in der durch Doppelpfeil 24 angedeuteten Richtung der Umschaltbewegungen verschiebbar geführt ist. Die Schaltrichtung 24 fällt mit der Längsachse 3 zusammen.

Der im Innern des Ventilgehäuses 2 angeordnete Elektromagnet 22 verfügt über eine ringförmige Spulenanordnung 52, die so plaziert ist, daß sie den hülsenförmigen Führungsabschnitt 45 radial außen koaxial umschließt. Die Anordnung ist insbesondere so getroffen, daß der Führungsabschnitt 45 die Spulenanordnung 52 in axialer Richtung vollständig durchsetzt.

Die Spulenanordnung 52 umfaßt mindestens eine Spule 53, die in einem aus ferromagnetischem Material bestehenden Flußleitstück 54 angeordnet ist. Letztere ist beim Ausführungsbeispiel als Ringkörper mit U-förmigem Querschnitt ausgeführt und enthält zwei mit radialem Abstand zueinander angeordnete hohlzylindrische Seitenwände 55, 56, die an einer Axialseite durch eine ringförmige Verbindungswand 57 leitend miteinander verbunden sind. Die Spule 53 sitzt in dem von den Wänden 55, 56, 57 umgrenzten Aufnahmeraum, der an der der Verbindungswand 57 entgegengesetzten Axialseite offen ist, so daß dort keine Verbindung zwischen den aus Weicheisenmaterial bestehenden Seitenwänden 55, 56 vorliegt.

Die Verbindungswand 57 dient zweckmäßigerweise zur gehäusefesten Fixierung der Spulenanordnung 52. Hierzu kann sie gemäß Fig. 1 und 2 über Befestigungsschrauben am ersten Gehäuseteil 4 festgelegt oder gemäß Fig. 3 zwischen den beiden Gehäuseteilen 4, 5 eingek-lemmt sein.

Der mindestens einen Spule 53 liegt an der offenen Axialseite des Flußleitstückes 54 ein ringscheibenähnlich gestalteter Ankerabschnitt 58 des Ventilgliedes 53 axial gegenüber. Dieser Ankerabschnitt 58 ist koaxial zu dem Führungsabschnitt 45 angeordnet und ragt ausgehend von diesem allseitig radial nach außen, so daß er eine der Spulenanordnung 52 axial vorgelagerte Position einnimmt. Da der Ankerabschnitt 58 am einen axialen Endbereich des Führungsabschnittes 45 angeordnet ist, hat das Ventilglied 23 insgesamt eine hutähnliche Gestalt. Der Ankerabschnitt 58 besteht aus ferromagnetischem Material, während der Führungsabschnitt 45 zweckmäßigerweise aus nicht-magnetisierbarem Material besteht. Daher empfiehlt sich die beim Ausführungsbeispiel gewählte mehrteilige Ausführungsform des Ventilgliedes 23.

Der Ankerabschnitt 58 repräsentiert den beweglichen Anker des Elektromagneten 22. Je nach Erregungszustand der Spulenanordnung 52 ist er dieser mehr oder weniger weit axial vorgelagert.

Beim Ausführungsbeispiel der Fig. 1 und 2 ist das Ventilglied 23 im Bereich seines Innenumfanges gehäuseseitig verschiebbar geführt. Es sitzt koaxial auf dem Gehäusefortsatz 25, relativ zu welchem es in den Umschaltrichtungen 24 verlagerbar ist. Dabei könnte der Führungsabschnitt 45 unmittelbar auf dem außen insbesondere zylindrisch geformten Gehäusefortsatz 25 laufen. Um eine optimale Gleitpaarung zu erhalten, empfiehlt sich jedoch die zusätzliche koaxiale Zwischenschaltung einer aus geeignetem Material bestehenden Führungshülse 46, wie dies beim Ausführungsbeispiel der Fall ist.

Im Gegensatz dazu erfolgt beim Ausführungsbeispiel gemäß Fig. 3 eine Verschiebeführung des Führungsabschnittes 45 im Bereich seines Außenumfanges. Es ist insbesondere vorgesehen, daß der Führungsabschnitt 45 am Innenumfang 49 der Spulenanordnung 52 verschiebbar geführt ist und dabei zweckmäßigerweise an der zylindrischen Innenfläche der inneren Seitenwand 55 des Flußleitstücks 54.

Bei beiden Ausführungsformen sind Maßnahmen verwirklicht, die eine selbsttätige Justierung des Ventilgliedes 23 relativ zum Ventilgehäuse 2 ermöglichen. Hierzu ist der Führungsabschnitt 45 jeweils bezüglich des Ventilgehäuses 2 quer zu den Umschaltrichtungen begrenzt beweglich und vorzugsweise begrenzt kippbar. Hierzu ist beim Ausführungsbeispiel der Fig. 3 zwischem dem Führungsabschnitt 45 und der inneren Seitenwand 55 ein geringfügiges Radialspiel vorgesehen, das durch einen zwischengefügten gummielastischen Zwischenring 47 ausgeglichen wird. Dieser gewährleistet eine begrenzte Querbeweglichkeit und übernimmt außerdem eine Dichtfunktion.

Beim Ausführungsbeispiel der Fig. 1 und 2 ist eine vergleichbare Anordnung getroffen, wobei allerdings das die Querbeweglichkeit garantierende Radialspiel und der zugeordnete Zwischenring 47 zwischen der Führungshülse 46 und dem Gehäusefortsatz 25 vorgesehen sind, während das Ventilglied 23 zwar axial verschieblich, jedoch radial spielfrei auf der in Axialrichtung gehäusefest fixierten Führungshülse 46 sitzt.

Beide Schaltventile 1, 1' sind mit einer Rückstellfederanordnung 65 ausgestattet, die sich zwischen dem Ventilgehäuse 2 und dem Ventilglied 23 abstützt und letzteres in eine der beiden Schaltstellungen, beispielsgemäß die erste Schaltstellung, vorspannt. Die Rückstellfederanordnung 65 befindet sich beim Ausführungsbeispiel der Fig. 3 innerhalb des hülsenähnlichen Führungsabschnittes 45, während sie beim Ausführungsbeispiel der Fig. 1 und 2 diesen Führungsabschnitt 45 radial außen koaxial umschließt und radial zwischen letzterer und der Spulenanordnung 52 liegt. Es handelt sich bei der Rückstellfederanordnung 65 zweckmäßigerweise um eine Schraubendruckfeder.

Beide Schaltventile 1, 1' sind ferner so ausgeführt, daß der Führungsabscnitt 45 in zumindest einer der beiden Schaltstellungen des Ventilgliedes 23 von dem zwischen zwei Ventilkanälen 9 überströmenden Druckmedium axial durchströmt wird. Näheres hierzu geht aus der weiteren Beschreibung der Schaltventile 1, 1' hervor. Bei dem Schaltventil 1' gemäß Fig. 3 ist die Mündung 18 des Arbeitskanals 8 von einem an dem zweiten Gehäuseteil 5 vorgesehenen ringförmigen ersten Ventilsitz 70 umgeben. Ihm liegt axial eine ebenfalls ringförmige erste Verschlußpartie 71 gegenüber, die am Ventilglied 23 insbesondere am zugewandten axialen Endbereich des Führungabschnittes 45 vorgesehen ist. Die Mündung 19 des Entlastungskanals 10 liegt radial außerhalb des ersten Ventilsitzes 70.

Mit bezüglich der ersten Verschlußpartie 71 axial entgegengesetzter Orientierung findet sich an dem Ventilglied 23 eine wiederum ringförmige zweite Verschlußpartie 72, die sich zweckmäßigerweise am entgegengesetzten axialen Endbereich des Führungsabschnittes 45 befindet. Ihr liegt ein zugewandter ringförmiger zweiter Ventilsitz 73 axial gegenüber, der gehäusefest angeordnet ist. Die Ausrichtung der Ventilsitze 70, 73 und Verschlußpartien 71, 72 bezüglich des Führungsabschnitts 45 ist konzentrisch. Die Mündung 20 des Speisekanals 7 liegt außerhalb des vom zweiten Ventilsitz 73 umgrenzten Bereiches.

In der durch die Rückstellfederanordnung 65 normalerweise vorgegebenen ersten Schaltstellung liegt das Ventilglied 23 mit der ersten Verschlußpartie 71, am ersten Ventilsitz 70 an. Dadurch ist gleichzeitig die zweite Verschlußpartie 72 vom zweiten Ventilsitz 73 abgehoben, so daß eine ringförmige Ventilöffnung 14' freigegeben ist. Das Druckmedium kann nun vom Speisekanal 7 über den angrenzenden ersten Ventilkammerabschnitt 74 und durch die freigegebene Ventilöffnung 14' hindurch von der einen offenen Axialseite her in den Innenraum 75 des Führungsabschnittes 45 eintreten, um anschließend diesen Innenraum 75 axial zu durchströmen und an der entgegengesetzten Axialseite aus dem Führungsabschnitt 45 auszutreten und über die sich anschließende Mündung 18 in den Arbeitskanal 8 einzutreten. Der mit der Mündung 19 des Entlastungskanals 10 kommunizierende zweite Ventilkammerabschnitt 76 ist dabei von der vorerwähnten Strömungsverbindung abgetrennt.

Durch Bestromung der Spulenanordnung 52 wird der Ankerabschnitt 58 entgegen der Kraft der Rückstellfederanordnung 65 axial an das Flußleitstück 54 herangezogen, bis die zweite Verschlußpartie 72 am zweiten Ventilsitz 73 anliegt und die erste Ventilöffnung 14' verschlossen ist. Nun sind der Speisekanal 7 und der mit diesem verbundene erste Ventilkammerabschnitt 74 vom Innenraum 75 des Führungsabschnittes 45 abgesperrt. Gleichzeitig ist die erste Verschlußpartie 71 vom ersten Ventilsitz 70 abgehoben und gibt eine ringförmige zweite Ventilöffnung frei, die es dem Druckmedium aus dem Arbeitskanal 8 erlaubt, in den Entlastungskanal 10 überzuströmen. In dieser zweiten Schaltstellung bildet der Innenraum 75 nicht mehr einen Strömungskanal im eigentlichen Sinne wie im Falle der ersten Schaltstellung, er stellt lediglich einen Druckausgleichskanal zur Verfügung, der es dem Druckmedium aus dem Arbeitskanal 8 ermöglicht, die entgegengesetzte Stirnseite des Führungsabschnittes 45 zu beaufschlagen und dadurch einen Ausgleich der fluidisch bedingten Druckkräfte zu bewirken.

Bei dem Schaltventil 1 der Fig. 1 und 2 liegt lediglich eine 2/2-Mege-Ventilfunktion vor. Das Ventilglied 23 verfügt daher lediglich über eine erste Verschlußpartie 71', der ein ebenfalls ringförmig konturierter erster Ventilsitz 70' axial gegenüberliegt, welcher an einem die Basispartie 32 radial überragenden Ringvorsprung 35 der Abdeckscheibe 33 radial außerhalb der Ventilöffnung 14 vorgesehen ist. Die erste Schaltstellung ist hier eine Schließstellung, in der die Ventilöffnung 14 verschlossen ist. Dabei wird die radial gerichtete Ventilöffnung 14 gleichzeitig von einer quer zur Umschaltrichtung 24 orientierten Schließfläche 44 überdeckt, die sich an einer hülsenförmigen Absperrpartie 43 des Führungsabschnittes 45 befindet. Somit ist die Ventilöffnung 14 bei in Schließstellung befindlichem Ventilglied 23 von der Schließfläche 44 radial außen überdeckt und abgesperrt. Da die Flächennormalen auf die Schließfläche 44 samt und sonders rechtwinkelig zu den Umschaltrichtungen 24 verlaufen, ist das Ventilglied 23 vom Speisedruck lediglich radial beaufschlagt und erfährt in Umschaltrichtung 24 keinerlei Kraftkomponente. Daher erübrigen sich besondere Maßnahmen, die einen Druckkraftausgleich bezüglich des Eingangsdruckes bewirken. Dies wiederum hat den Vorteil, daß für den Ventilsitz 70' ein verhältnismäßig großer Durchmesser gewählt werden kann, ohne daß sich dies auf die zum Umschalten des Ventilgliedes 23 erforderlichen Schaltkräfte auswirkt.

In der zweiten Schaltstellung ist die Ventilöffnung 14 freigegeben, so daß das Druckmedium vom Speisekanal 7 in den Arbeitskanal 8 überströmen kann und dabei durch den den Speisekanal 7 koaxial umschließenden Führungsabschnitt 45 des Ventilgliedes 23 hindurchströmt.

Um der Spulenanordnung 52 die zur Betätigung erforderliche elektrische Betätigungsenergie zuführen zu können, sind elektrische Leiter 69 vorgesehen. Diese führen beim Ausführungsbeispiel der Fig. 3 zu einer außen am Ventilgehäuse im radialen Umfangsbereich der Spulenanordnung 52 vorgesehenen elektrischen Anschlußvorrichtung 77, die zweckmäßigerweise eine Steckvorrichtung ist. Da sie etwa auf gleicher axialer Höhe mit der Spulenanordnung 52 und dem Ventilglied 23 liegt, kann eine axial besonders kompakte Baulänge des Schaltventils realisiert werden.

Das Schaltventil 1' gemäß Fig. 3 verfügt des weiteren über Maßnahmen, die eine variable Vorgabe der Umschaltweglänge des Ventilgliedes 23 relativ zum Ventilgehäuse 2 ermöglichen.

Hierzu ist auf einer Axialseite des Ventilgliedes 23 in dessen Umschaltweg ein Anschlagteil 78 vorgesehen, das wie abgebildet vorzugsweise einen der Ventilsitze 73 trägt. Da der axiale Abstand zwischen den beiden Ventilsitzen 70, 73 die Umschaltweglänge vorgibt, läßt sich durch Veränderung der Axialposition des Anschlagteils 78 die Umschaltweglänge nach Bedarf vorgeben.

Das Verstellen erfolgt beim Ausführungsbeispiel durch einen Schraubvorgang, indem das Anschlagteil 78 als Schraubteil ausgeführt ist, das mit dem Ventilgehäuse 2 in Schraubverbindung steht. Andere Einstellmöglichkeiten sind allerdings ebenfalls möglich.

Bei dem Schaltventil 1' der Fig. 3 sind ferner Maßnahmen vorgesehen, die die Vorgabe unterschiedlicher Federvorspannungen der Rückstellfederanordnung 65 ermöglichen. Dabei stützt sich die Rückstellfederanordnung 65 lediglich mittelbar unter Vermittlung eines gehäuseseitig fixierten Einstellgliedes 79 am Ventilgehäuse 23 ab. Das Einstellglied 79 ist relativ zum Ventilgehäuse 23 in den Umschaltrichtungen 24 verstellbar und justierbar, zu welchem Zweck es vergleichbar dem Anschlagteil 78 als Schraubteil ausgeführt sein kann.

Vorzugsweise erfolgt die verstellbare Lagerung des Einstellgliedes 79 an dem ebenfalls verstellbaren Anschlagteil 78. Dadurch sind nach Bedarf voneinander unabhängige Einstellungen der Federvorspannung und der Umschaltweglänge möglich.

## Patentansprüche

1. Elektromagnetisch betätigbares Schaltventil, mit einem Ventilgehäuse (2), das eine Ventilkammer (6) enthält, in die mehrere Ventilkanäle (9) einmünden und in der sich ein zur Steuerung der Verbindung zwischen den Ventilkanälen (9) unter Vermittlung eines Elektromagneten (22) zwischen zwei Schaltstellungen umschaltbares, von einer Rückstellfederanordnung (65) beaufschlagtes Ventilglied (23) befindet, wobei das Ventilglied (23) einen bezüglich des Ventilgehäuses (2) in Richtung der Umschaltbewegungen (24) verschiebbar geführten hülsenartigen Führungsabschnitt (45) aufweist, der von der Spulenanordnung (52) des Elektromagneten (22) koaxial umschlossen ist und in einer der Schaltstellungen von dem zwischen zwei Ventilkanälen (9) überströmenden Druckmedium axial durchströmt wird, **dadurch gekennzeichnet, dass** ein im Umschaltweg des Ventilgliedes (23) angeordnetes Anschlagteil (78) vorgesehen ist, das zur variablen Vorgabe der Umschaltweglänge des Ventilgliedes (23) relativ zum Ventilgehäuse (2) verstellbar ist, und dass sich die Rückstellfederanordnung (65) zwischen dem Ventilglied (23) und einem Einstellglied (79) abstützt, wobei das Einstellglied (79) zur Vorgabe unterschiedlicher Federvorspannungen an dem Anschlagteil (78) in Richtung der Umschaltbewegungen verstellbar gelagert ist.

2. Schaltventil nach Anspruch 1, **dadurch gekennzeichnet, dass** das Ventilglied (23) einen zu dem Führungsabschnitt (45) koaxialen und radial nach außen ragenden ringscheibenartigen Ankerabschnitt (58) aufweist, der der Spulenanordnung (52) axial vorgelagert ist.

3. Schaltventil nach Anspruch 2, **dadurch gekennzeichnet, dass** das Ventilglied (23) hutähnliche Gestalt hat.

4. Schaltventil nach einem der Ansprüche 1 bis 3, **dadurch gekennzeichnet, dass** der Führungsabschnitt (45) im Bereich seines Außenumfanges gehäuseseitig verschiebbar geführt ist.

5. Schaltventil nach Anspruch 4, **dadurch gekennzeichnet, dass** der Führungsabschnitt (45) am Innenumfang der Spulenanordnung (52) verschiebbar geführt ist.

6. Schaltventil nach einem der Ansprüche 1 bis 3, **dadurch gekennzeichnet, dass** der Führungsabschnitt (45) im Bereich seines Innenumfanges gehäuseseitig verschiebbar geführt ist.

7. Schaltventil nach einem der Ansprüche 1 bis 6, **dadurch gekennzeichnet, dass** der Führungsabschnitt (45) bezüglich des Ventilgehäuses (2) quer zur Richtung der Umschaltbewegungen begrenzt beweglich und insbesondere begrenzt kippbar ist.

8. Schaltventil nach einem der Ansprüche 1 bis 7, **dadurch gekennzeichnet, dass** das Anschlagteil (78) einen mit dem Ventilglied (23) kooperierenden Ventilsitz (73) trägt.

9. Schaltventil nach einem der Ansprüche 1 bis 8, **dadurch gekennzeichnet, dass** die Rückstellfederanordnung (65) koaxial zum Führungsabschnitt (45) des Ventilgliedes (23) angeordnet ist.

10. Schaltventil nach einem der Ansprüche 1 bis 9, **dadurch gekennzeichnet, dass** der Führungsabschnitt (45) eine hülsenförmige Absperrpartie (43) aufweist, der in einer der Schaltstellungen eine radial gerichtete Ventilöffnung (14) mit einer quer zur Richtung der Umschaltbewegungen orientierten Schließfläche (44) überdeckt.

11. Schaltventil nach einem der Ansprüche 1 bis 9, **dadurch gekennzeichnet, dass** die Ventilkanäle (9) einen mit einer fluidischen Druckmittelquelle verbindbaren Speisekanal (7), einen mit einem Verbraucher verbindbaren Arbeitskanal (8) und einen Entlastungskanal (10) umfassen, wobei das Ventilglied (23) zur Ermöglichung einer 3/2-Wege-Ventilfunktion zwei axial entgegengesetzt orientierte und konzentrisch zum Führungsabschnitt (45) angeordnete ringförmige Verschlusspartien (71, 72) aufweist, denen jeweils ein gehäusefester Ventilsitz (70, 73) gegenüberliegt, und wobei der axial beidseits offene Innenraum (75) des Führungsabschnittes (45) in einer der Schaltstellungen einen Strömungskanal bildet, der von dem zwischen zwei Ventilkanälen überströmenden Druckmedium durchströmt wird.

12. Schaltventil nach Anspruch 11, **dadurch gekennzeichnet, dass** die Verschlusspartien (71, 72) an den axialen Endbereichen des Führungsabschnittes (45) vorgesehen sind.

13. Schaltventil nach einem der Ansprüche 1 bis 12, **dadurch gekennzeichnet, dass** die Spulenanordnung (52) von dem hülsenartigen Führungsabschnitt (45) koaxial vollständig durchsetzt ist.

14. Schaltventil nach einem der Ansprüche 1 bis 13, **dadurch gekennzeichnet, dass** außen am Ventilgehäuse (2) im radialen Umfangsbereich der Spulenanordnung (52) eine mit der Spulenanordnung (52) verbundene elektrische Anschlussvorrichtung (77) vorgesehen ist.

## Claims

1. Electro-magnetically actuable control valve, with a valve housing (2) containing a valve chamber (6) into which lead several valve passages (9) and in which is located a valve member (23) for controlling the connection between the valve passages (9) through the agency of an electromagnet (22), switchable between two switch positions and acted upon by a resetting spring assembly (65), wherein the valve member (23) has a sleeve-like guide section (45), movably guided relative to the valve housing (2) in the direction of the switching movements (24), coaxially encompassed by the coil assembly (52) of the electromagnet (22), and in one of the switching positions subject to the axial flow of the pressure medium overflowing from the two valve passages (9), **characterized in that** a stop element (78) located in the switching path of the valve member (23) is provided and is adjustable for variable presetting of the switching path length of the valve member (23) relative to the valve housing (2), and that the resetting spring assembly (65) rests between the valve member (23) and an adjusting element (79), wherein the adjusting element (79) is supported on the stop element (78) with a facility for adjustment for the presetting of different amounts of spring pretension.

2. Control valve according to claim 1, **characterized in that** the valve member (23) has an annular-disc-like armature section (58), coaxial to the guide section (45) and extending radially outwards, mounted axially in front of the coil assembly (52).

3. Control valve according to claim 2, **characterized in that** the valve member (23) has a cap-like shape.

4. Control valve according to any of claims 1 to 3, **characterized in that** the guide section (45) is movably guided on the housing side in the area of its outer periphery.

5. Control valve according to claim 4, **characterized in that** the guide section (45) is movably guided on the inner periphery of the coil assembly (52).

6. Control valve according to any of claims 1 to 3, **characterized in that** the guide section (45) is movably guided on the housing side in the area of its inner periphery.

7. Control valve according to any of claims 1 to 6, **characterized in that** the guide section (45) has limited movement relative to the valve housing (2) at right-angles to the direction of the switching movements and in particular a limited facility for tilting.

8. Control valve according to any of claims 1 to 7, **characterized in that** the stop element (78) carries a valve seat (73) which cooperates with the valve member (23).

9. Control valve according to any of claims 1 to 8, **characterized in that** the resetting spring assembly (65) is mounted coaxially to the guide section (45) of the valve member (23).

10. Control valve according to any of claims 1 to 9, **characterized in that** the guide section (45) has a sleeve-shaped isolating section (43) which, in one of the switching positions, covers a radially aligned valve port (14) by a closing surface (44) aligned at right-angles to the direction of the switching movements.

11. Control valve according to any of claims 1 to 9, **characterized in that** the valve passages (9) comprise a feed passage (7) connectable to a fluidic pressure medium source, an operating passage (8) connectable to an actuator, and a vent passage (10), wherein the valve member (23) - to permit a 3/2 way valve function - has two annular sealing sections (71, 72) aligned axially opposite one another and concentrically to the guide section (45), with a valve seat (70, 73) fixed to the housing opposite each of them, and wherein in one of the switching positions the internal space (75) of the guide section (45) which is open axially on either side forms a flow passage through which passes the pressure medium overflowing between two valve passages.

12. Control valve according to claim 11, **characterized in that** the sealing sections (71, 72) are provided at the axial end section of the guide section (45).

13. Control valve according to any of claims 1 to 12, **characterized in that** the sleeve-like guide section (45) passes coaxially and completely through the coil assembly (52).

14. Control valve according to any of claims 1 to 13, **characterized in that** an electrical connection device (77) connected to the coil assembly (52) is provided on the outside of the valve housing (2) in the radial peripheral area of the coil assembly (52).

## Revendications

1. Soupape de commutation à actionnement électromagnétique, comportant un boîtier de soupape (2) qui contient une chambre de soupape (6) dans laquelle débouchent plusieurs canaux de soupape (9) et dans laquelle se trouve un obturateur de soupape (23) qui, pour la commande de la communication entre les canaux de soupape (9), peut commuter entre deux positions de commutation, par l'intermédiaire d'un électro-aimant (22), et qui est sollicité par un dispositif à ressort de rappel (65), dans laquelle l'obturateur de soupape (23) comporte une portion de guidage (45) du genre douille guidée en coulissement dans la direction des mouvements de commutation (24), par rapport au boîtier de soupape (2) et qui est enfermée coaxialement par l'agencement de bobine (52) de l'électro-aimant (22), et qui est traversée axialement par le fluide sous pression circulant entre deux canaux de soupape (9), dans l'une des positions de commutation, **caractérisée en ce qu'**un élément de butée (76) est prévu dans la. trajectoire de commutation de l'obturateur de soupape (23) et est réglable par rapport au boîtier de soupape (2), pour la sélection variable de la longueur de la course de commutation de l'obturateur de soupape (23), et **en ce que** le dispositif à ressort de rappel (65) prend appui entre l'obturateur de soupape (23) et un organe de réglage (79), l'organe de réglage (79) étant monté réglable dans la direction des mouvements de commutation, pour la sélection de différentes précontraintes du ressort sur l'élément de butée (78).

2. Soupape de commutation selon la revendication 1, **caractérisée en ce que** l'obturateur de soupape (23) comporte une portion d'ancrage (58) du genre disque annulaire qui est coaxiale à la portion de guidage (45), qui dépasse radialement vers l'extérieur et qui est placée axialement devant l'agencement de bobine (52).

3. Soupape de commutation selon la revendication 2, **caractérisée en ce que** l'obturateur de soupape (23) présente une forme du genre chapeau.

4. Soupape de commutation selon l'une des revendications 1 à 3, **caractérisée en ce que** la portion de guidage (45) est guidée en coulissement, côté boîtier, dans la zone de son pourtour extérieur.

5. Soupape de commutation selon la revendication 4, **caractérisée en ce que** la portion de guidage (45) est guidée en coulissement sur le pourtour intérieur de l'agencement de bobine (52).

6. Soupape de commutation selon l'une des revendications 1 à 3, **caractérisée en ce que** la portion de guidage (45) est guidée en coulissement, côté boîtier, dans la zone de son pourtour intérieur.

7. Soupape de commutation selon l'une des revendications 1 à 6, **caractérisée en ce que** la portion de guidage (45) est déplaçable de manière limitée par rapport au boîtier de soupape (2), transversalement à la direction des mouvements de commutation, et peut en particulier basculer de manière limitée.

8. Soupape de commutation selon l'une des revendications 1 à 7, **caractérisée en ce que** l'élément de butée (78) porte un siège de soupape (73) coopérant avec l'obturateur de soupape (23).

9. Soupape de commutation selon l'une des revendications 1 à 8, **caractérisée en ce que** le dispositif à ressort de rappel (65) est disposé coaxialement à la portion de guidage (45) de l'obturateur de soupape (23).

10. Soupape de commutation selon l'une des revendications 1 à 9, **caractérisée en ce que** la portion de guidage (45) comporte une partie de fermeture (43) en forme de douille qui, dans l'une des positions de commutation, recouvre une ouverture de soupape (14) orientée radialement, par une surface de fermeture (44) orientée transversalement à la direction du mouvement de commutation.

11. Soupape de commutation selon l'une des revendications 1 à 9, **caractérisée en ce que** les canaux de soupape (9) comprennent un canal d'alimentation (7) qui peut être relié à une source fluidique de fluide sous pression, un canal de travail (8) qui peut être relié à un récepteur et un canal de décharge (10), l'obturateur de soupape (23) comportant, pour permettre une fonction de soupape à 3/2 voies, deux parties de fermeture (71, 72) de forme annulaire orientées en sens opposés axialement et disposées concentriquement à la portion de guidage (45), à chacune desquelles fait face un siège de soupape (70, 73) solidaire du boîtier, et le volume intérieur (75) de la portion de guidage (45), ouvert axialement des deux côtés, formant, dans l'une des positions de commutation, un canal d'écoulement qui est traversé par le fluide sous pression circulant entre deux canaux de soupape.

12. Soupape de commutation selon la revendication 11, **caractérisée en ce que** les parties de fermeture (71, 72) sont prévues dans les zones terminales axiales de la portion de guidage (45).

13. Soupape de commutation selon l'une des revendications 1 à 12, **caractérisée en ce que** l'agencement de bobine (52) est entièrement traversé coaxialement par la portion de guidage (45) du genre douille.

14. Soupape de commutation selon l'une des revendications 1 à 13, **caractérisée en ce qu'**à l'extérieur du boîtier de soupape (2) il est prévu, dans la zone périphérique radiale de l'agencement de bobine (52), un dispositif de connexion électrique (77), relié à l'agencement de bobine (52).
